# FASCICULE DE BREVET EUROPEEN

(11) **EP 3 000 902 B1**
(45) Date de publication et mention de la délivrance du brevet: **26.06.2019**
(21) Numéro de dépôt: 15186295.0
(22) Date de dépôt: 22.09.2015
(51) Int. Cl.: C22B 3/04, C22B 11/00

(54) **PROCÉDÉ DE RÉCUPÉRATION DU PLATINE PRÉSENT DANS UN ASSEMBLAGE MEMBRANE-ÉLECTRODE**
RÜCKGEWINNUNGSVERFAHREN VON PLATIN, DAS IN EINER MEMBRAN-ELEKTRODEN-ZUSAMMENSETZUNG VORHANDEN IST
METHOD FOR RECOVERING THE PLATINUM FOUND IN A MEMBRANE-ELECTRODE ASSEMBLY

(30) Priorité: 24.09.2014 FR 1459003
(43) Date de publication de la demande: 30.03.2016
(73) Titulaire: Commissariat à l'Energie Atomique et aux Energies Alternatives, 75015 Paris (FR)
(72) Inventeur: Vincent, Denis, 38360 Noyarey (FR); Billy, Emmanuel, 38100 Grenoble (FR); Laucournet, Richard, 38500 La Buisse (FR)
(74) Mandataire: Talbot, Alexandre

(56) Documents cités:
- WO-A1-2006/115684
- WO-A1-2008/155464
- US-A- 5 133 843
- US-A1- 2009 049 954
- US-A1- 2009 226 352
- US-A1- 2013 139 648
- ANGELIDIS ET AL: "Preliminary studies of platinum dissolution from a spent industrial catalyst", APPLIED CATALYSIS A: GENERAL, ELSEVIER SCIENCE, AMSTERDAM, NL, vol. 142, no. 2, 15 août 1996 (1996-08-15) , pages 387-395, XP022263621, ISSN: 0926-860X, DOI: 10.1016/0926-860X(96)00088-9
- BARAKAT M A ET AL: "Recovery of platinum from spent catalyst", HYDROMETALLURGY, ELSEVIER SCIENTIFIC PUBLISHING CY. AMSTERDAM, NL, vol. 72, no. 3-4, 1 mars 2004 (2004-03-01) , pages 179-184, XP004493589, ISSN: 0304-386X, DOI: 10.1016/S0304-386X(03)00141-5

## Description

### Domaine technique de l'invention

L'invention est relative à un procédé de récupération du platine présent dans un assemblage membrane-électrode.

### État de la technique

Une pile à combustible comprend un assemblage membrane-électrode, classiquement formé d'une membrane échangeuse de protons, chaque face de la membrane étant recouverte d'une électrode. Les électrodes sont formées d'une couche de diffusion de gaz et d'une couche catalytique, aussi appelée couche de catalyseur. Le platine, présentant d'excellentes propriétés catalytiques, est couramment utilisé comme catalyseur.

Le platine représente 25% du coût du dispositif électrochimique.

Compte tenu de la demande croissante en platine, des ressources naturelles disponibles et de son coût élevé, le recyclage du platine est devenu un axe de recherche stratégique pour de nombreux industriels.

Le recyclage et la valorisation du platine permettraient, en effet, d'abaisser les coûts de production de ces piles à combustible et, en particulier, de les rendre compétitives par rapport à d'autres technologies (pétrole, batterie, etc).

Une des techniques, actuellement utilisée, pour récupérer les métaux du groupe du platine (MGP, ou PGM en anglais pour « platinum group metals ») est la pyrométallurgie. Elle est déjà utilisée pour le recyclage et la valorisation des déchets issus de l'industrie électronique ou des pots catalytiques (US 7,815,706).

Après broyage, les composants sont chauffés à des températures de l'ordre de 1100°C à 1700°C, éventuellement en présence d'un fondant tel que CaO.

Les métaux précieux peuvent ensuite être séparés et récupérés par hydrométallurgie par exemple. Cette opération consiste à traiter le produit issu de l'étape de pyrométallurgie par des solutions agressives, comme l'eau régale, ce qui permet de dissoudre les métaux précieux et de les isoler lors d'une étape ultérieure.

Cependant, de tels procédés ne sont pas adaptés aux piles à combustible car ils ne permettent pas de valoriser les composants autre que le catalyseur.

De plus, la carbonisation des membranes perfluorosulfonées des piles à combustible conduit, non seulement, à un dégagement de CO₂ mais en plus à la formation de gaz toxiques tels que HF et SO₂.

Dans le domaine des piles à combustible, différents procédés ont déjà été mis en oeuvre pour valoriser, recycler le platine présent dans d'anciennes piles à combustible.

Le document US 2009/0226352 divulgue un procédé de récupération d'un métal noble, comme du platine, présent dans un assemblage membrane-électrode, comprenant les étapes suivantes: - séparer la membrane électrolyte polymère de la première électrode et de la seconde électrode de manière à rendre accessible les couches de catalyseur par immersion dans un mélange eau/alcool, - soumettre au moins les couches de catalyseur à une lixiviation de manière à dissoudre au moins une partie du platine. La lixiviation est réalisée avec une solution de 30ml d'eau régale et 10ml de l'eau dé-ionisée. La solution d'eau régale, ayant une densité de 1.20 gr/cm³, a une concentration en acide de 5.2 mol/L.

Le document US 2008/0064771 décrit le recyclage d'une pile à combustible à l'aide d'un fluide supercritique. Le fluide supercritique permet de dissoudre les composants fluorés. Les métaux précieux peuvent ensuite être séparés par lavage, filtration, séparation ou encore par pyrolyse. La solution contenant les composés fluorés dissous est ensuite traitée pour récupérer et/ou purifier lesdits composés.

Cependant, ce type de procédé requiert des températures et pressions élevées, ce qui est difficilement envisageable à grande échelle.

Comme décrit dans le document US 7,635,534, l'assemblage membrane-électrode peut également être refroidi jusqu'à des températures de l'ordre de - 75°C puis pulvérisé afin de former une poudre. La poudre est ensuite traitée avec une solution acide concentrée, telle que HCl/H₂O₂, ou de l'eau régale, pour dissoudre les métaux nobles. Les métaux nobles sont ensuite récupérés par électrodéposition et/ou tout autre technique de réduction.

Ce procédé ne permet pas de valoriser tous les composants de l'assemblage membrane-électrode.

Les documents US 5,133,843 et US 2006/0147791 décrivent le traitement d'un assemblage membrane-électrode par des solutions acides concentrées comme HCl ou l'eau régale. Ce traitement permet de dissoudre les particules métalliques. Les sels de platine peuvent ensuite être récupérés sous forme de précipité ou par électrodéposition.
La membrane peut ensuite être nettoyée avec une solution de soude à 50°C puis rincée à l'eau avant d'être réutilisée.

Le catalyseur peut également être séparé des autres éléments par un champ magnétique (US 2008/0050623). Néanmoins, comme le platine est un matériau non-magnétique, ce procédé est uniquement applicable aux catalyseurs contenant, en plus du platine, des éléments sensibles aux champs magnétiques comme le cobalt.

Les documents US 2006/0237034, US 7,225,798 et US 5,718,894 décrivent l'immersion d'assemblage membrane-électrode une solution contenant de l'alcool pour dissocier la membrane des électrodes.
Dans le document US 5,718, 894, la membrane est ensuite nettoyée à l'eau puis au peroxyde d'hydrogène en vue d'être valorisée.
Dans le procédé du document US 7,255,798, la solution obtenue est ensuite chauffée, puis filtrée et finalement centrifugée de manière à séparer les éléments catalytiques et les éléments formant la membrane. Ces éléments peuvent être ensuite purifiés et réutilisés.
Les vitesses de centrifugation nécessaires à la bonne séparation des éléments, de l'ordre de 10000tr/min, rendent ce procédé inadapté à grande échelle.

### Objet de l'invention

L'invention a pour but de remédier aux inconvénients de l'art antérieur et, en particulier, de proposer un procédé permettant de récupérer le platine des assemblages membrane-électrodes, le procédé présentant un plus fort rendement de récupération du platine, et permettant la valorisation de différents éléments des assemblages membrane-électrode.

Cet objet est atteint par un procédé de récupération du platine présent dans un assemblage-membrane-électrode,
l'assemblage membrane-électrode étant formé d'une membrane électrolyte polymère munie d'une première face et d'une seconde face,
la première face étant recouverte d'une première électrode formée d'une première couche de catalyseur et d'une première couche de diffusion de gaz,
la seconde face étant recouverte d'une seconde électrode formée d'une seconde couche de catalyseur et d'une seconde couche de diffusion de gaz, chaque couche de catalyseur étant interposée entre la membrane et la couche de diffusion de gaz correspondante,
le catalyseur, d'au moins une des couches de catalyseur, étant à base de platine,
ledit procédé comprenant les étapes successives suivantes :
- séparer la membrane électrolyte polymère de la première électrode et de la seconde électrode de manière à rendre accessible les couches de catalyseur,
- soumettre au moins les couches de catalyseur à une lixiviation de manière à dissoudre au moins une partie du platine, la lixiviation étant réalisée avec une solution acide ayant une concentration en acide inférieure ou égale à 1mol/L. la solution de lixiviation étant un mélange d'eau et de HN0₃/HCl et la lixiviation étant réalisée à une température comprise entre 70°C et 90°C.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente, sous forme d'un schéma-bloc, des modes de réalisation de l'invention,
- la figure 2 représente sur un graphique, le rendement de lixiviation en fonction du pH,
- la figure 3 représente sur un graphique le rendement de lixiviation du platine, en fonction de la masse de platine par mole d'acide,
- la figure 4 représente un spectre, obtenu par diffraction des rayons X, sur un précipité obtenu après lixiviation,
- la figure 5 représente un spectre, obtenu par diffraction des rayons X, sur un précipité calciné.

### Description d'un mode de réalisation préférentiel de l'invention

Les piles à combustible à membrane échangeuse de protons (PEMFC pour « proton exchange membrane fuel cells ») comportent des assemblages membrane-électrode (AME).
Chaque AME est disposée entre deux plaques bipolaires qui jouent le rôle de collecteurs de courant et permettent de distribuer les gaz dans le coeur de la pile.

Pour pouvoir recycler le coeur de pile d'une PEMFC, les assemblages membrane-électrode sont, tout d'abord, séparés des plaques bipolaires par une opération manuelle ou mécanique.
Les plaques bipolaires peuvent être indépendamment valorisées.

Chaque assemblage membrane-électrode (AME) est ainsi rendu accessible pour pouvoir procéder à la récupération du platine.

Chaque AME est, plus particulièrement, formé d'une membrane électrolyte polymère munie d'une première face et d'une seconde face.
La première face est recouverte d'une première électrode formée d'une première couche de catalyseur et d'une première couche de diffusion de gaz. La seconde face est recouverte d'une seconde électrode formée d'une seconde couche de catalyseur et d'une seconde couche de diffusion de gaz.
La couche de diffusion de gaz peut également être appelée couche de diffusion. Les couches de diffusion jouent le rôle d'élément de liaison entre les plaques bipolaires et les couches catalytiques. Elles permettent de distribuer les combustibles et comburants au coeur de la pile. Elles doivent être à la fois poreuses pour permettre l'écoulement des fluides, et conductrices pour transférer les électrons. Elles sont généralement en tissus en fibres de carbone.

Chaque couche de catalyseur est interposée entre la membrane et la couche de diffusion de gaz correspondante. La couche de catalyseur peut également être appelée couche catalytique ou couche active.
Les deux électrodes sont séparées par la membrane électrolytique.

Le catalyseur, d'au moins une des couches de catalyseur, est à base de platine.
Par à base de platine, on entend que la couche de catalyseur comporte au moins du platine et, plus particulièrement, au moins 40% massique de platine. La couche de catalyseur peut être constituée de platine ou être formée de platine et d'au moins un autre élément. Par exemple, la couche de catalyseur peut être formée de platine et de cobalt.
Elle pourrait aussi comprendre du ruthénium, du rhodium ou tout autre métal du groupe du platine.
Avantageusement, les deux couches de catalyseur sont à base de platine.

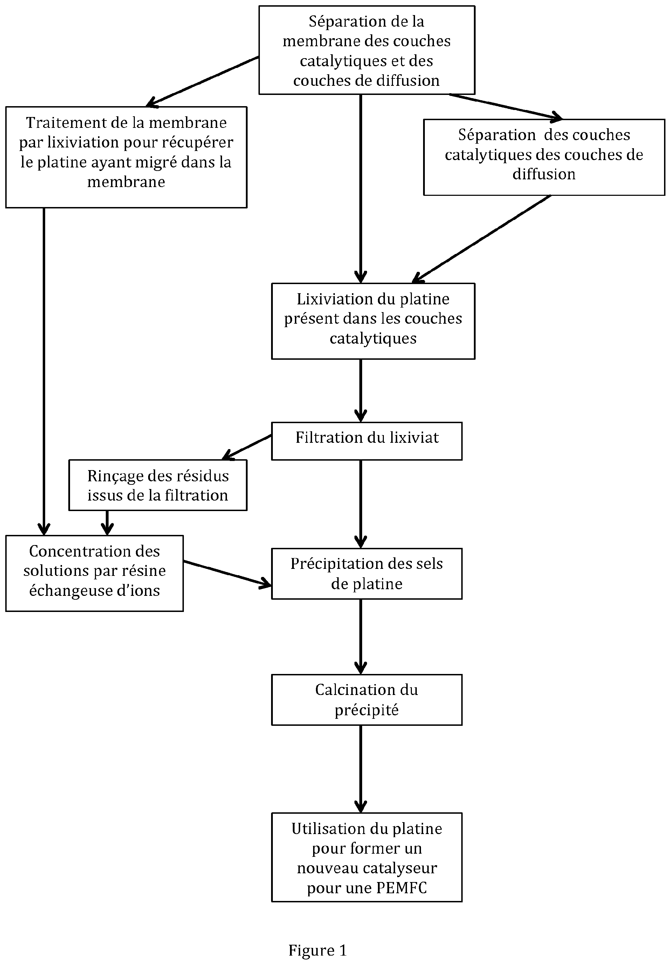

Comme représenté sur le schéma-bloc de la figure 1, le procédé de récupération du platine, présent dans un assemblage membrane-électrode, comprend les étapes successives suivantes :
- séparer la membrane électrolyte polymère de la première électrode et de la seconde électrode de manière à rendre accessible les couches de catalyseur,
- soumettre au moins les couches de catalyseur à une lixiviation de manière à dissoudre au moins une partie du platine, la lixiviation étant réalisée avec une solution acide ayant une concentration en acide inférieure ou égale à 1mol/L.

La membrane électrolyte polymère est dissociée, séparée de la première électrode et de la seconde électrode de manière à rendre accessible les couches de catalyseur.
La membrane est, préférentiellement, séparée des première et seconde électrodes par immersion, de l'assemblage membrane-électrode, dans un mélange eau/alcool.

Préférentiellement, le mélange eau/alcool est un mélange eau/éthanol, ayant pour rapport volumique 50/50.

Le contact entre la solution eau/éthanol et l'AME provoque le gonflement de la membrane. Les liaisons entre les couches de catalyseur et la membrane sont rompues. Les électrodes sont séparées de la membrane : on obtient, d'une part, la membrane, et, d'autre part, deux ensembles formés chacun d'une couche de diffusion et d'une couche catalytique.

Préférentiellement, la séparation de la membrane des électrodes, par immersion, dans un mélange eau/éthanol, est réalisée à une température comprise entre 10°C et 40°C, et encore plus préférentiellement, entre 15°C et 30°C.
L'étape de séparation est, préférentiellement, réalisée à pression ambiante, i.e. à une pression de l'ordre de 1bar.

De manière alternative, la séparation peut être réalisée au moyen d'un abrasif mais il est plus difficile d'obtenir une séparation totale ce qui limite le taux de récupération de la membrane.

La membrane peut ensuite être valorisée.
La membrane électrolyte polymère est, par exemple, à base de polymère perfluoré sulfoné de type Nafion®.

Après l'étape de séparation de l'AME, le procédé de valorisation du platine comporte une étape dans laquelle au moins les couches de catalyseur sont soumises à une lixiviation, de manière à dissoudre au moins une partie du platine. Avantageusement, au moins 75% du platine présent dans les couches de catalyseur est dissous.

Par au moins les couches de catalyseur, on entend que l'on peut lixivier soit uniquement les couches de catalyseur soit directement les électrodes, formées d'une couche de diffusion et d'une couche catalytique.

Dans le premier cas, et comme représenté à la figure 1, le procédé comporte en plus, une étape permettant de séparer les couches de diffusion des couches de catalyseur, avant l'étape de lixiviation.

Préférentiellement, les couches de catalyseur sont séparées des couches de diffusion de gaz par broyage, de manière à obtenir un catalyseur sous la forme d'une poudre.

Le broyage peut être réalisé grâce à un broyeur à boulets, permettant d'exercer une action mécanique forte sur les électrodes afin de désolidariser la couche catalytique de la couche de diffusion de gaz.

La lixiviation d'une poudre par rapport à une couche mince permettra, avantageusement, d'augmenter la surface de contact entre la solution de lixiviation et le catalyseur et d'obtenir un meilleur rendement de lixiviation.

Le rendement de lixiviation correspond au rapport entre la masse de platine initialement introduite, au début de l'étape de lixiviation, et la masse de platine extraite de la solution.

Au moins les couches de catalyseurs sont lixiviées avec une solution, dite de lixiviation, ayant une concentration en acide inférieure ou égale à 1mol/L. L'utilisation de solutions faiblement concentrées en acide permet de limiter leur dégradation dans le temps.

Plusieurs assemblages membrane-électrode peuvent être traités consécutivement dans une même solution.

L'utilisation d'une solution diluée permet de réduire les coûts de valorisation des AME et de limiter les coûts liés au traitement des déchets industriels.

Par solution diluée, on entend, par exemple, une solution diluée au moins 5 fois. Avantageusement, la solution est diluée de 10 à 20 fois.

La solution de lixiviation est un mélange d'eau et de HNO₃/HCl.

Cette solution est obtenue par dilution d'une solution mère concentrée de HNO₃/HCl.

La solution mère de HNO₃/HCl a pour rapport volumique 1/X avec X allant de 2 à 4. Le mélange HNO₃/HCl est également appelé eau régale. Avantageusement, X est égal à 3.

Cette solution mère a été diluée de 10 à 20 fois, ce qui permet de travailler avec des solutions de HNO₃/HCl présentant des concentrations inférieures ou égales à 1mol/L.
L'eau utilisée est, avantageusement, de l'eau dé-ionisée ou distillée.

L'utilisation d'une solution de HNO₃/HCl, faiblement concentrée, permet de limiter le dégagement indésirable de NOx, lié au mélange de HCl et HNO₃, qui a un impact environnemental fort et dont la gestion des déchets entraine des coûts élevés pour les industriels.

Lors de la lixiviation, pour limiter le dégagement de vapeur, un condenseur peut être placé au-dessus d'un ballon contenant la solution de lixiviation et le catalyseur. La partie de la fraction vaporisée est condensée et renvoyée dans le ballon. La lixiviation est réalisée sous reflux.
La solution de lixiviation est, avantageusement, homogénéisée par agitation, par exemple au moyen d'un barreau magnétique.

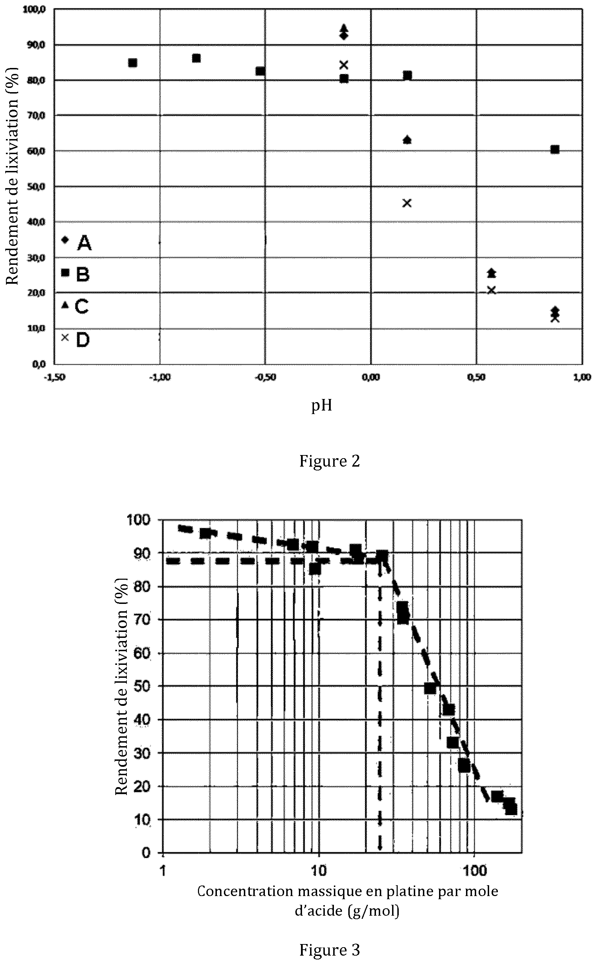

Les points du graphique de la figure 2 représentent les rendements de lixiviation obtenus en faisant varier différents paramètres :
- les points A correspondent à un rapport solide/liquide de 5%, la température est celle du reflux,
- les points B correspondent à un rapport solide/liquide de 0,3%, la température est celle du reflux,
- les points C correspondent à un rapport solide/liquide de 5%, la température est de 90°C,
- les points D correspondent à un rapport solide/liquide de 5%, la température est 70°C.

Chaque rapport solide/liquide correspond au taux de charge, ce qui représente le rapport entre la masse de solide contenant le platine sur la masse de solution lixiviante.

Dans chaque cas, la lixiviation a duré une nuit.

La lixiviation est réalisée à une température comprise entre 70°C et 90°C. Par comprise entre, on entend que les bornes de température sont incluses : la température peut aller de 70°C à 90°C.

Préférentiellement, la lixiviation est réalisée pendant une durée comprise entre 1h et 7h.

Encore plus préférentiellement, la température est de 90°C et la durée de traitement de 3h.

Préférentiellement, le pH de la solution de lixiviation est maintenu à un pH inférieur ou égal à 0,2.

La demanderesse a constaté qu'un tel pH permettait d'assurer un rendement de lixiviation supérieur à 80%, voire supérieur à 90%.

Le pH de la solution est, avantageusement, mesuré en continu ou à intervalle régulier au moyen d'un pH-mètre.

La solution est asservie en pH, par exemple, par ajout de HNO₃/HCl quand le pH remonte au-dessus de 0,2.

Préférentiellement, la quantité de platine, soumise à l'étape de lixiviation, est inférieure à 25g par mole d'acide. La demanderesse a constaté qu'au-dessus de 25g de platine par mole d'acide, le rendement de lixiviation chute de façon significative (figure 3).

La quantité de platine correspond à la quantité de platine introduite au début de l'étape de lixiviation. Cette quantité de platine peut être estimée en fonction de données théoriques fournies par le fabricant de catalyseur ou par le concepteur d'assemblage membrane électrode (AME).

Dans le cas où seules les couches catalytiques sont soumises à l'étape de lixiviation, la quantité de solvant est adaptée au volume de catalyseur, et plus particulièrement, au volume de poudre traitée. Durant l'étape de lixiviation, le rapport volumique catalyseur/solution de lixiviation est compris entre 2,5 et 10.

Dans le cas où, les électrodes, i.e. à la fois les couches catalytiques et les couches de diffusion, sont soumises à l'étape de lixiviation, les électrodes seront avantageusement, traitées les unes après les autres dans la même solution, pour limiter la quantité de solvant et permettre d'avoir une solution finale ayant une concentration supérieure ou égale à 20g/L.

Ce procédé permet, avantageusement, de pouvoir traiter de grandes surfaces d'assemblages membrane-électrode, avec une faible quantité de solution, sans passer par une étape délicate et contraignante de séparation couche de diffusion/couche catalytique. De plus, le lixiviat obtenu présente de fortes concentrations en platine.

Le lixiviat, issu de l'étape de lixiviation, présente une concentration en platine supérieure ou égale à 20g/L. Préférentiellement, le lixiviat est ensuite filtré.
La filtration est, par exemple, réalisée par filtration papier. Cela permet de filtrer d'éventuels résidus carbonés de la solution.
Les résidus, qui peuvent contenir des fragments de platine, seront conservés pour être traités ultérieurement.

Du chlorure d'ammoniaque et/ou de l'ammoniac est ajouté au lixiviat, après l'étape de filtration, de manière à faire précipiter le platine dissous sous la forme de (NH₄)₂PtCl₆.

Préférentiellement, pendant l'étape de précipitation, le pH est maintenu à un pH supérieur à 7. De la soude peut être utilisée pour ajuster le pH.

Préférentiellement, pendant l'étape de précipitation, la température est inférieure ou égale à 20°C. Une faible température permet, avantageusement, de limiter la solubilité du sel dans la solution et de favoriser la précipitation dudit sel.

Le précipité peut être, avantageusement, récupéré par filtration.

Le précipité de (NH₄)₂PtCl₆ est, ensuite, calciné à une température supérieure à 500°C pour récupérer le platine sous une forme métallique.

Le platine peut servir à la synthèse d'une nouvelle couche catalytique pour une PEMFC.

Selon un mode de réalisation particulier, le catalyseur peut contenir, en plus du platine, d'autres métaux de transition et/ou d'autres métaux du groupe du platine (MGP). Ces éléments présentent également un intérêt économique à être recyclé.
La solution de lixiviation utilisée dans le procédé permet, avantageusement, de dissoudre ces métaux en même temps que le platine.

Par exemple, la couche catalytique peut également comprendre du cobalt. Dans ce cas, après l'étape de lixiviation de la soude est ajoutée, au lixiviat, pour faire précipiter le cobalt.
Le cobalt peut alors être séparé du platine dissous en solution par filtration.

Différentes étapes du procédé, décrit ci-dessus, peuvent générer des eaux de lavage et/ou des résidus faiblement concentrés en platine. Ces résidus sont, par exemple, issus de l'étape de lixiviation.
La membrane peut également être soumise à une étape de lixiviation en vue de récupérer le platine qui aurait pu migrer au sein de la membrane.

Selon un mode de réalisation particulier, le platine est, avantageusement, récupéré dans tous les déchets, rebuts issus du démantèlement de la PEMFC.

Au moins une étape dite de concentration est mise en oeuvre pour favoriser cette récupération.
L'étape de concentration permet de concentrer et/ou d'extraire et de concentrer le platine contenu dans les rebuts du procédé.
L'étape de concentration est réalisée au moyen d'une résine échangeuse d'ions.
La résine échangeuse d'ions est, avantageusement, une résine échangeuse d'ions anioniques.
Ce type de résine permet d'adsorber le platine présent en solution (Journal of Hazardous Materials 192 (2011) 1155-1160 ; Hydrometallurgy 113-114 (2012) 200-204 ; Hydrometallurgy 100 (2010) 161-167). Le platine peut alors être récupéré, par exemple par précipitation, et valorisé.

Le procédé de récupération, de valorisation du platine va maintenant être décrit au moyen des exemples ci-dessous donnés à titre illustratif et non limitatif.

Le procédé a été utilisé pour traiter cinq assemblages membrane-électrode contenant 120 mg de platine chacun, avec une concentration de platine de 0.6 mg/cm².
Les membranes sont des membranes en Nafion®.
Les AME sont plongés dans une solution eau/éthanol, ayant pour rapport volumique 50/50, afin de séparer la membrane de la couche de diffusion et du catalyseur.

Dans un ballon de 50mL, une solution contenant 21.6mL H₂O, 1.8mL HCl (37%), et 0.6mL HNO₃ (69.5%) a été préparée. Les AME sont introduites dans le ballon sous la forme de pastille de 1cm² environ. 60 pastilles sont ainsi introduites dans le ballon. L'ensemble est ensuite porté à 90°C sous agitation durant 6h. Afin de limiter le dégagement de vapeur, un condenseur est placé au-dessus du ballon durant la totalité de l'expérience.

Au bout de 6 heures, les pastilles sont extraites de la solution puis rincées avec 50mL d'eau. Les eaux de rinçage sont conservées afin d'être traitées ultérieurement. Une nouvelle série de 60 pastilles est alors introduite dans le ballon.
Pour traiter l'ensemble des AME, ce cycle est reproduit 17 fois. Au final, une solution de couleur orange, ayant une concentration en platine de 23g/L, est obtenue. Ceci représente environ 92% du platine initialement présent dans les 5 AME.

A la solution contenant le platine dissous, 8.6 mL de NH₄OH et 5.5g de NH₄Cl sont ajoutés à température ambiante, ce qui conduit à la formation d'un précipité de (NH₄)₂PtCl₆. Ce précipité étant soluble, seule une partie du sel peut être récupérée. La valeur de solubilité du sel étant de 3g_{Pt}/L, cette étape conduit à la récupération de 87% du platine contenu dans la solution.

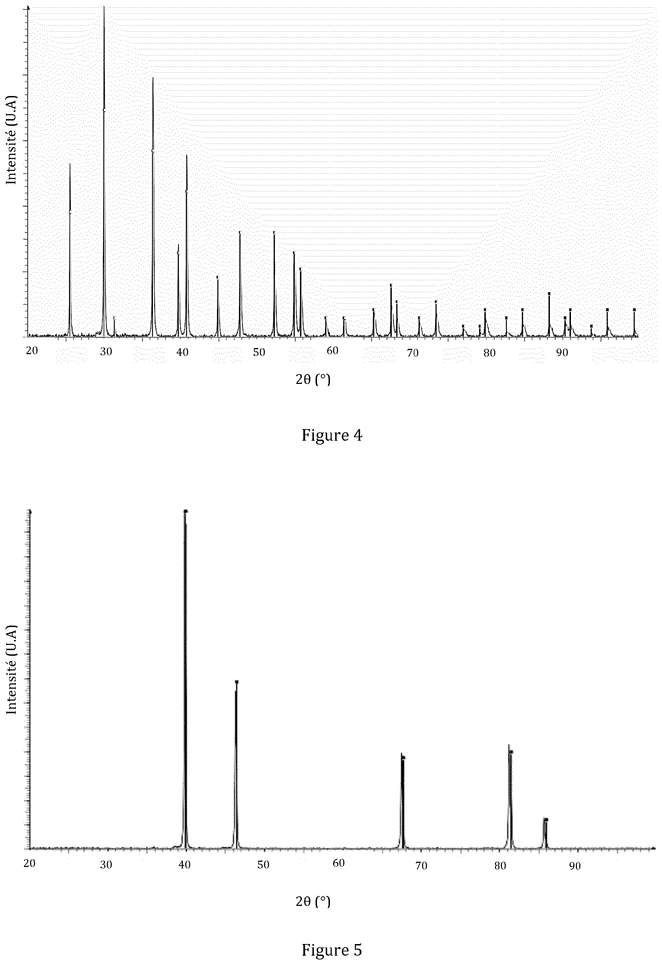

Le précipité est, ensuite, filtré avec un papier filtre. Le spectre, obtenu par diffraction des rayons dudit précipité après filtration, confirme que le précipité est du (NH₄)₂PtCl₆ (figure 4).

Le précipité filtré est, ensuite, calciné à 500°C durant 1 heure pour obtenir du platine. Le spectre, obtenu par diffraction des rayons du précipité après calcination, confirme que le produit obtenu est du platine métallique (figure 5).

La solution filtrée est conservée pour être ultérieurement soumise à une étape de concentration grâce à une résine échangeuse d'ions.

Sur les 600 mg de platine, contenu initialement, dans les 5 AME, 480mg ont été récupéré sous forme de platine métallique, ce qui représente 80% de la masse initiale.

Afin de valoriser au maximum le platine, les eaux de lavage et/ou les résidus faiblement concentrés en platine sont soumis à une étape dite de concentration. Les eaux de rinçage et la solution filtrée contiennent encore 120mg de platine dans un volume de solution d'environ 800mL.
Compte tenu de la solubilité du sel (NH₄)₂PtCl₆, il est nécessaire de concentrer cette solution avant d'effectuer une nouvelle étape de précipitation.

L'étape de concentration est réalisée grâce à des résines échangeuses d'ions anioniques du type Dowex 1X4.
Les solutions faiblement concentrées sont introduites dans une colonne contenant la résine. Le débit de passage de la solution est réglé au moyen d'un robinet. Le débit est régulé de manière à ce que la solution s'écoule lentement à travers la résine pour maximiser le temps de contact entre la résine et la solution. A titre d'exemple, le débit utilisé peut être égal à 100ml/h avec un temps de contact entre la résine et la solution qui peut être égal à 30 secondes. L'absorption du platine dans la résine est ainsi facilitée. Cette étape permet de fixer la totalité du platine sur la résine.

La quantité de résine est ajustée en fonction de la quantité de platine à récupérer. Dans le cas de la résine de type Dowex 1X4, le chargement maximal est de 227mg de Pt par gramme de résine. Cette valeur a été déterminée à partir du modèle de cinétiques de pseudo second ordre (PSO) qui permet d'évaluer, notamment, la constante de vitesse et le chargement maximal de la résine (Process Biochemistry 34 (1999) 451-465).
Pour récupérer les 120mg de platine contenu dans les eaux de rinçage, seul 0.6g de résine sont nécessaires.

Une fois le platine absorbé, il est élué à partir d'une solution contenant 0.5M de thiourée et 0.1M de HCl. Ce mélange permet d'extraire 60% du platine fixé dans la résine avec une concentration de 10g/L. Un nouveau cycle de précipitation est réalisé, ce qui permet de récupérer 57mg de platine supplémentaire et de porter le rendement global de récupération à près de 90%.

Ce procédé permet de valoriser, recycler le platine présent dans d'anciennes piles à combustible et/ou dans des rebuts de production de piles à combustible.

Le procédé de valorisation du platine permet de s'affranchir d'une étape de traitement thermique à des températures supérieures à 1000°C ou inférieures à 0°C.
En particulier, le procédé de valorisation permet de s'affranchir de l'étape de pyrométallurgie, classiquement utilisée, et de récupérer le platine contenu dans le catalyseur des piles sans altérer les autres constituants du coeur de pile comme la membrane. Les autres constituants des PEMFC peuvent également être valorisés.
Le procédé est, avantageusement, également dépourvu d'une étape de séparation par centrifugation des différents éléments constitutifs de la pile à combustible.
L'apport en énergie extérieure, pour mener à bien le procédé, et l'apport de réactif par rapport à la quantité de catalyseur à extraire sont considérablement minimisés.
L'impact environnemental est, avantageusement, fortement limité en utilisant des solutions acides diluées.
Le procédé permet également le traitement des solutions faiblement chargées en platine afin d'améliorer le rendement global de récupération. Le rendement global du procédé atteint un rendement de récupération de près de 90%.
Le procédé permet également de valoriser les métaux de transition qui peuvent être également contenu dans la couche catalytique.

## Revendications

1. Procédé de récupération du platine présent dans un assemblage membrane-électrode,
l'assemblage membrane-électrode étant formé d'une membrane électrolyte polymère munie d'une première face et d'une seconde face,
la première face étant recouverte d'une première électrode formée d'une première couche de catalyseur et d'une première couche de diffusion de gaz,
la seconde face étant recouverte d'une seconde électrode formée d'une seconde couche de catalyseur et d'une seconde couche de diffusion de gaz, chaque couche de catalyseur étant interposée entre la membrane et la couche de diffusion de gaz correspondante,
le catalyseur, d'au moins une des couches de catalyseur, étant à base de platine,
ledit procédé comprenant les étapes successives suivantes :
- séparer la membrane électrolyte polymère de la première électrode et de la seconde électrode de manière à rendre accessible les couches de catalyseur,
- soumettre au moins les couches de catalyseur à une lixiviation de manière à dissoudre au moins une partie du platine, la lixiviation étant réalisée avec une solution acide ayant une concentration en acide inférieure ou égale à 1mol/L, la solution de lixiviation étant un mélange d'eau et de HNO₃/HCl, la lixiviation étant réalisée à une température comprise entre 70°C et 90°C.

2. Procédé selon la revendication 1, **caractérisé en ce que** le pH de la solution de lixiviation est maintenu à un pH inférieur ou égal à 0,2.

3. Procédé selon l'une des revendications 1 et 2, **caractérisé en ce que** la quantité de platine, soumise à l'étape de lixiviation est inférieure à 25g par mole d'acide.

4. Procédé selon l'une quelconque des revendications 1 à 3, **caractérisé en ce que** la lixiviation est réalisée pendant une durée comprise entre 1h et 7h.

5. Procédé selon l'une quelconque des revendications 1 à 4, **caractérisé en ce que** l'étape de séparation de la membrane électrolyte polymère de la première électrode et de la seconde électrode, est réalisée à une température comprise entre 10°C et 40°C.

6. Procédé selon l'une quelconque des revendications 1 à 5, **caractérisé en ce que** la membrane est séparée des première et seconde électrodes par immersion, de l'assemblage membrane-électrode, dans un mélange eau/alcool.

7. Procédé selon la revendication 6, **caractérisé en ce que** le mélange eau/alcool est un mélange eau/éthanol, ayant pour rapport volumique 50/50.

8. Procédé selon l'une quelconque des revendications 1 à 7, **caractérisé en ce que**, avant l'étape de lixiviation, les couches de catalyseurs sont séparées des couches de diffusion de gaz.

9. Procédé selon la revendication 8, **caractérisé en ce que** les couches de catalyseurs sont séparées des couches de diffusion de gaz par broyage, de manière à obtenir un catalyseur sous la forme d'une poudre.

10. Procédé selon l'une des revendications 8 et 9, **caractérisé en ce que**, durant l'étape de lixiviation, le rapport volumique catalyseur/solution de lixiviation est compris entre 2,5 et 10.

11. Procédé selon l'une quelconque des revendications 1 à 10, **caractérisé en ce que**, le lixiviat, issu de l'étape de lixiviation, est filtré.

12. Procédé selon la revendication 11, **caractérisé en ce que** du chlorure d'ammoniaque ou de l'ammoniac est ajouté au lixiviat, après l'étape de filtration, de manière à faire précipiter le platine dissous sous la forme de (NH₄)₂PtCl₆.

13. Procédé selon la revendication 12, **caractérisé en ce que**, pendant l'étape de précipitation, le pH est maintenu à un pH supérieur à 7.

14. Procédé selon l'une des revendications 12 et 13, **caractérisé en ce que**, pendant l'étape de précipitation, la température est inférieure ou égale à 20°C.

15. Procédé selon l'une quelconque des revendications 12 à 14, **caractérisé en ce que** le précipité de (NH₄)₂PtCl₆ est calciné à une température supérieure à 500°C pour récupérer le platine sous une forme métallique.

16. Procédé selon l'une quelconque des revendications 1 à 15, **caractérisé en ce que** le procédé comporte au moins une étape de concentration, permettant de concentrer une solution en platine, au moyen d'une résine échangeuse d'ions.

17. Procédé selon l'une quelconque des revendications 1 à 16, **caractérisé en ce que** le catalyseur comprend du cobalt et **en ce que** de la soude est ajoutée au lixiviat, issu de l'étape de lixiviation, pour faire précipiter le colbalt.

## Patentansprüche

1. Verfahren zur Rückgewinnung von Platin, das in einer Membran-Elektroden-Anordnung vorhanden ist,
wobei die Membran-Elektroden-Anordnung aus einer Polymerelektrolytmembran gebildet ist, die eine erste Fläche und eine zweite Fläche aufweist,
wobei die erste Fläche mit einer ersten Elektrode bedeckt ist, die aus einer ersten Katalysatorschicht und aus einer ersten Gasdiffusionsschicht gebildet ist,
wobei die zweite Fläche mit einer zweiten Elektrode bedeckt ist, die aus einer zweiten Katalysatorschicht und aus einer zweiten Gasdiffusionsschicht gebildet ist,
wobei jede Katalysatorschicht zwischen der Membran und der entsprechenden Gasdiffusionsschicht angeordnet ist,
wobei der Katalysator, mindestens einer der Katalysatorschichten, auf Platin basiert,
wobei das Verfahren die folgenden aufeinanderfolgenden Schritte umfasst:
- Trennen der Polymerelektrolytmembran von der ersten Elektrode und von der zweiten Elektrode, um die Katalysatorschichten zugänglich zu machen,
- Unterziehen mindestens der Katalysatorschichten einem Auswaschen, um mindestens einen Teil des Platins zu lösen, wobei das Auswaschen mit einer sauren Lösung mit einer Säurekonzentration kleiner oder gleich 1 mol/l durchgeführt wird, wobei die Auswaschlösung eine Mischung von Wasser und HNO₃/HCl ist, wobei das Auswaschen bei einer Temperatur zwischen 70 °C und 90 °C durchgeführt wird.

2. Verfahren nach Anspruch 1, **dadurch gekennzeichnet, dass** der pH der Auswaschlösung auf einem pH kleiner oder gleich 0,2 gehalten wird.

3. Verfahren nach einem der Ansprüche 1 und 2, **dadurch gekennzeichnet, dass** die Menge an Platin, die dem Schritt des Auswaschens unterzogen wird, kleiner ist als 25 g pro Mol der Säure.

4. Verfahren nach einem der Ansprüche 1 bis 3, **dadurch gekennzeichnet, dass** das Auswaschen während einer Dauer zwischen 1 h und 7 h durchgeführt wird.

5. Verfahren nach einem der Ansprüche 1 bis 4, **dadurch gekennzeichnet, dass** der Schritt des Trennens der Polymerelektrolytmembran von der ersten Elektrode und von der zweiten Elektrode bei einer Temperatur zwischen 10 °C und 40 °C durchgeführt wird.

6. Verfahren nach einem der Ansprüche 1 bis 5, **dadurch gekennzeichnet, dass** die Membran von der ersten und zweiten Elektrode durch Eintauchen, der Membran-Elektoden-Anordnung, in eine Mischung von Wasser/Alkohol getrennt wird.

7. Verfahren nach Anspruch 6, **dadurch gekennzeichnet, dass** die Mischung von Wasser/Alkohol eine Mischung von Wasser/Ethanol mit einem Volumenverhältnis von 50/50 ist.

8. Verfahren nach einem der Ansprüche 1 bis 7, **dadurch gekennzeichnet, dass**, vor dem Schritt des Auswaschens, die Katalysatorschichten von den Gasdiffusionsschichten getrennt werden.

9. Verfahren nach Anspruch 8, **dadurch gekennzeichnet, dass** die Katalysatorschichten von den Gasdiffusionsschichten durch Zerkleinern getrennt werden, um einen Katalysator in der Form eines Pulvers zu erhalten.

10. Verfahren nach einem der Ansprüche 8 und 9, **dadurch gekennzeichnet, dass**, während des Schritts des Auswaschens, das Volumenverhältnis von Katalysator/Auswaschlösung zwischen 2,5 und 10 beträgt.

11. Verfahren nach einem der Ansprüche 1 bis 10, **dadurch gekennzeichnet, dass** die Auswaschflüssigkeit, die aus dem Schritt des Auswaschens stammt, filtriert wird.

12. Verfahren nach Anspruch 11, **dadurch gekennzeichnet, dass** Ammoniumchlorid oder Ammoniak der Auswaschflüssigkeit, nach dem Filtrationsschritt, zugesetzt wird, um das Platin, gelöst in der Form von (NH₄)₂PtCl₆, zu fällen.

13. Verfahren nach Anspruch 12, **dadurch gekennzeichnet, dass**, während des Fällungsschritts, der pH auf einem pH von mehr als 7 gehalten wird.

14. Verfahren nach einem der Ansprüche 12 und 13, **dadurch gekennzeichnet, dass**, während des Fällungsschritts, die Temperatur kleiner oder gleich 20 °C ist.

15. Verfahren nach einem der Ansprüche 12 bis 14, **dadurch gekennzeichnet, dass** der Niederschlag von (NH₄)₂PtCl₆ bei einer Temperatur von mehr als 500 °C calciniert wird, um das Platin in metallischer Form rückzugewinnen.

16. Verfahren nach einem der Ansprüche 1 bis 15, **dadurch gekennzeichnet, dass** das Verfahren mindestens einen Konzentrationsschritt umfasst, der es gestattet, eine Platinlösung mit einem Ionenaustauscherharz zu konzentrieren.

17. Verfahren nach einem der Ansprüche 1 bis 16, **dadurch gekennzeichnet, dass** der Katalysator Kobalt umfasst, und dadurch, dass Soda der Auswaschflüssigkeit zugesetzt wird, die aus dem Schritt des Auswaschens stammt, um das Kobalt zu fällen.

## Claims

1. Method for recovering the platinum found in a membrane-electrode assembly,
the membrane-electrode assembly being formed by a polymer electrolyte membrane provided with a first surface and a second surface,
the first surface being covered by a first electrode formed by a first catalyst layer and a first gas diffusion layer,
the second surface being covered by a second electrode formed by a second catalyst layer and a second gas diffusion layer,
each catalyst layer being placed between the membrane and the corresponding gas diffusion layer,
the catalyst of at least one of the catalyst layers being a platinum-based catalyst, said method comprising the following successive steps:
- separating the polymer electrolyte membrane from the first electrode and from the second electrode so as to make the catalyst layers accessible,
- performing leaching on at least the catalyst layers so as to dissolve at least a part of the platinum, the leaching being performed with an acid solution having an acid concentration lower than or equal to 1mol/L, the leaching solution being a mixture of water and HNO₃/HCl, the leaching being performed at a temperature comprised between 70°C and 90°C.

2. Method according to claim 1, **characterised in that** the pH of the leaching solution is kept at a pH lower than or equal to 0.2.

3. Method according to one of claims 1 and 2, **characterised in that** the quantity of platinum subjected to the leaching step is less than 25g per mole of acid.

4. Method according to any one of claims 1 to 3, **characterised in that** the leaching is performed during a time comprised between 1h and 7h.

5. Method according to any one of claims 1 to 4, **characterised in that** the separation step of the polymer electrolyte membrane from the first electrode and from the second electrode is performed at a temperature comprised between 10°C and 40°C.

6. Method according to any one of claims 1 to 5, **characterised in that** the membrane is separated from the first and second electrodes by immersing the membrane-electrode assembly in a water/alcohol mixture.

7. Method according to claim 6, **characterised in that** the water/alcohol mixture is a water/ethanol mixture having a volume ratio of 50/50.

8. Method according to any one of claims 1 to 7, **characterised in that**, before the leaching step, the catalyst layers are separated from the gas diffusion layers.

9. Method according to claim 8, **characterised in that** the catalyst layers are separated from the gas diffusion layers by crushing so as to obtain a catalyst in the form of a powder.

10. Method according to one of claims 8 and 9, **characterised in that**, during the leaching step, the volume ratio of the catalyst/leaching solution is comprised between 2.5 and 10.

11. Method according to any one of claims 1 to 10, **characterised in that** the leachate, resulting from the leaching step, is filtered.

12. Method according to claim 11, **characterised in that** ammonium chloride or ammonia is added to the leachate, after the filtering step, so as to make the dissolved platinum precipitate in (NH₄)₂PtCl₆ form.

13. Method according to claim 12, **characterised in that**, during the precipitation step, the pH is kept at a pH of more than 7.

14. Method according to one of claims 12 and 13, **characterised in that**, during the precipitation step, the temperature is lower than or equal to 20°C.

15. Method according to any one of claims 12 to 14, **characterised in that** the (NH₄)₂PtCl₆ precipitate is calcined at a temperature of more than 500°C to recover the platinum in metal form.

16. Method according to any one of claims 1 to 15, **characterised in that** the method comprises at least a concentration step enabling a platinum solution to be concentrated by means of an ion exchange resin.

17. Method according to any one of claims 1 to 16, **characterised in that** the catalyst comprises cobalt and **in that** soda is added to the leachate, resulting from the leaching step, to make the cobalt precipitate.
